**Europäisches Patentamt**

**European Patent Office**

**Office européen des brevets**

(19)

(11) Veröffentlichungsnummer : **0 476 422 B1**

(12) # EUROPÄISCHE PATENTSCHRIFT

(45) Veröffentlichungstag der Patentschrift :
**27.07.94 Patentblatt 94/30**

(51) Int. Cl.[5] : **C01B 31/36, C01B 33/18**

(21) Anmeldenummer : **91114866.6**

(22) Anmeldetag : **03.09.91**

(54) **Verfahren zur Herstellung von Beta-Siliciumcarbidpulver.**

(30) Priorität : **07.09.90 CH 2919/90**

(43) Veröffentlichungstag der Anmeldung :
**25.03.92 Patentblatt 92/13**

(45) Bekanntmachung des Hinweises auf die
Patenterteilung :
**27.07.94 Patentblatt 94/30**

(84) Benannte Vertragsstaaten :
**CH DE ES FR GB IT LI NL SE**

(56) Entgegenhaltungen :
**NL-A- 8 802 116**
**NL-A- 8 802 117**
**US-A- 4 693 878**
**JOURNAL OF THE EUROPEAN CERAMIC SO-**
**CIETY, VOL 5, 1989, F. K. VAN DIJEN AND AL.,**
**"CHEMICAL REACT-ION ENGINEERING**
**ASPECTS OF A ROTARY REACTOR FOR CAR-**
**BOTHERMAL SYNTHESIS OF SIC" pages**
**55-61**

(56) Entgegenhaltungen :
**JOURNAL OF THE EUROPEAN CERAMIC SO-**
**CIETY, VOL5, 1989, F. K. VAN DIJEN AND**
**AL.,"THE REMOVAL OF CARBON OR CAR-**
**BON RESIDUES FROM CERAMIC POWDERS**
**OR GREENWAREWITH AMMONIA", PAGES**
**385-390**
**COMMUNICATIONS OF THE AMERICAN CE-**
**RAMIC SOCIETY, JULY 1983, GEORGE**
**CHIA-TSINGWEI, "BETA SIC POW-DERS PRO-**
**DUCED BY CARBOTH. REDUCTION OF SILICA**
**IN A HIGH-TEMP. ROTARY FURNACE" P.**
**C111-C113**

(73) Patentinhaber : **H.C. Starck GmbH & Co. KG**
**Im Schleeke 78-91**
**D-38642 Goslar (DE)**

(72) Erfinder : **van Dijen, Franciscus, Dr.**
**Jestetter Strasse 5A**
**Baltersweil (DE)**
Erfinder : **Vogt, Ulrich**
**Tannenstrasse 3**
**Schaffhausen (CH)**

(74) Vertreter : **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P. Barz**
**Siegfriedstrasse 8**
**D-80803 München (DE)**

## Beschreibung

Die vorliegende Erfindung betrifft ein Verfahren zur Herstellung von β-Siliciumcarbid aus Kieselsäure und Kohlenstoff.

Siliciumcarbid wird seit vielen Jahrzehnten im wesentlichen unverändert nach dem Acheson-Verfahren aus Siliciumdioxid in Form von Quarzsand und Kohlenstoff in Form von Petrolkoks im elektrischen Widerstandsofen bei Temperaturen über 2000°C gewonnen. Das so erhaltene Produkt ist grobstückig und muss, je nach Verwendungszweck, mehr oder weniger fein zerkleinert werden. Für die immer bedeutender werdende Verwendung als Sinterpulver zur Herstellung von Siliciumcarbid-Keramik ist eine extrem feine Mahlung erforderlich, die viel Energie und einen grossen apparativen Aufwand erfordert. Weitere Nachteile des Acheson-Verfahrens sind darin begründet, dass die erforderlichen Oefen sehr gross sein müssen, um wirtschaftliches Arbeiten zu ermöglichen und die Ausbeute für eine Ofenfahrt nur in der Grössenordnung von 20% liegt, so dass ein grosser Teil des eingesetzten Materials recycliert werden muss. Ausserdem liefert das Acheson-Verfahren die hexagonale Hochtemperaturmodifikation des Siliciumcarbids, die meistens als α-Modifikation bezeichnet wird, während die für gewisse Anwendungen bevorzugte kubische Tieftemperaturmodifikation, üblicherweise als β-Modifikation bezeichnet, nach diesem Verfahren nicht zugänglich ist.

Zur Herstellung von β-Siliciumcarbid sind ebenfalls Verfahren bekannt, die von Siliciumdioxid und Kohlenstoff ausgehen. Die Reaktanden müssen dazu feinteilig und innig gemischt sein. Die Reaktionstemperaturen liegen im allgemeinen unterhalb von 1800°C, wobei durch Zusatz von feinteiligem β-SiC als Keimbildner und/oder Metallen oder Metalloxiden die Reaktionsgeschwindigkeit erhöht und die Korngrösse des Produkts verringert wird. Als Siliciumdioxid wurden sowohl feingemahlener Quarz als auch Fällungskieselsäuren oder pyrogene Kieselsäure eingesetzt, als Kohlenstoff fanden beispielsweise Petrolkoks oder Russ Verwendung. Das Feinmahlen von Quarz ist jedoch sehr energieaufwendig und kann Teilchengrössen unter 1 μm, die für die Herstellung von SiC wünschenswert sind, nur mit hohen Kosten erreichen. Bei der Verwendung von Fällungskieselsäuren, wie sie beispielsweise in der US-PS 4 377 563 beschrieben ist, oder pyrogener Kieselsäure erschweren dagegen die spezifischen Eigenschaften dieser Produkte die technische Durchführung, da sie wegen ihrer ausgeprägten Verdickungswirkung nur schlecht in wässriger Suspension verarbeitet werden können. Zum Mischen, Desagglomerieren oder Sprühtrocknen ist aber die Bildung von Suspensionen mit hohem Feststoffgehalt und niedriger Viskosität wünschenswert oder erforderlich.

Ein weiterer Nachteil der pyrogenen Kieselsäuren ist der relativ hohe Preis.

Aufgabe der vorliegenden Erfindung war daher, ein Verfahren zur Herstellung von β-Siliciumcarbid aufzuzeigen, das von einem preisgünstigen Siliciumdioxid mit günstiger Teilchengrösse und guten Verarbeitungseigenschaften ausgeht.

Erfindungsgemäss wird diese Aufgabe durch das Verfahren nach Patentanspruch 1 gelöst.

Es wurde gefunden, dass das bei der Herstellung von Aluminiumfluorid aus Hexafluorkieselsäure und Aluminiumhydroxid nach der Reaktionsgleichung

$$H_2SiF_6 + 2Al(OH)_3 ---> 2AlF_3 + SiO_2 + 4H_2O$$

entstehende amorphe Siliciumdioxid nicht nur eine günstige Teilchengrösse besitzt, die eine rasche Umsetzung mit Kohlenstoff ermöglicht, sondern auch wässrige Suspensionen mit Feststoffgehalten bis über 40 Gew.% bei niedriger Viskosität bildet.

Das Siliciumdioxid stellt bei der industriellen Aluminiumfluoridproduktion ein Abfallprodukt dar und ist deshalb sehr preisgünstig und in grossen Mengen verfügbar. Die Gewinnung im Labormassstab ist beispielsweise in der US-PS 4 693 878 (Example 1) beschrieben.

Für die Herstellung von β-Siliciumcarbid wird das Siliciumdioxid zweckmässig mit Säure gewaschen, um den Aluminiumgehalt auf unschädliche Werte zu verringern und so eine nachträgliche Säurebehandlung des Siliciumcarbids zu dem gleichen Zweck unnötig zu machen. Als Waschflüssigkeit kann die in der Aluminiumfluoridherstellung ohnehin benötigte Hexafluorkieselsäure dienen, es sind aber auch andere Säuren, wie beispielsweise Salzsäure, verwendbar. Besondere Massnahmen zur weiteren Reduktion des Fluorgehalts sind nicht erforderlich, da das Fluor bei den zur Siliciumcarbidherstellung nötigen Temperaturen entweicht, es kann jedoch vorteilhaft sein, auf die in der US-PS 4 693 878 beschriebene Weise das Fluor bereits vor der weiteren Umsetzung zu entfernen.

Als Kohlenstoffquelle wird im erfindungsgemässen Verfahren zweckmässig Russ, und zwar vorzugsweise Gasruss oder Ofenruss eingesetzt. Zur Entfernung von Metallspuren wird der Ofenruss vorzugsweise gewaschen, um auch auf diesem Wege keine Verunreinigungen in das Endprodukt einzuschleppen.

In einer bevorzugten Ausführungsform des erfindungsgemässen Verfahrens wird das gewaschene Siliciumdioxid zunächst in einer Rührwerkskugelmühle oder einem Attritor gemahlen bzw. desagglomeriert. Als Mahlflüssigkeit wird vorzugsweise Wasser verwendet und als Mahlkörper vorzugsweise solche aus Silicium-

2

dioxid, beispielsweise Kugeln aus Quarzglas oder abgerundeter Quarzsand. Als besonders vorteilhaft hat sich ein unter dem Namen "Ottawasand" bekannter Quarzsand mit einer Korngrösse von ca. 1 mm erwiesen.

Zur Vermeidung von Verunreinigungen durch Metallabrieb wird vorzugsweise eine Rührwerkskugelmühle bzw. ein Attritor mit Elastomerauskleidung, beispielsweise aus Polyurethan, verwendet. Bei diesem Mahl- bzw. Desagglomeriervorgang wird vorteilhaft bereits das zur Keimbildung erforderliche β-Siliciumcarbidpulver zugesetzt. Es ist auch möglich, an dieser Stelle Zusätze wie beispielsweise Sinterhilfsmittel für die spätere Verwendung des erfindungsgemäss hergestellten Siliciumcarbids einzubringen.

Weiterhin können zur Erleichterung des Mahl- bzw. Desagglomeriervorgangs übliche Hilfsstoffe, insbesondere Verflüssiger und Entschäumer, zugesetzt werden.

Der Kohlenstoff, vorzugsweise in Form von Gasruss oder Ofenruss, wird vorteilhaft ebenfalls in die Rührwerkskugelmühle bzw. den Attritor eingebracht, um eine optimale Vermischung zu erreichen. Anschliessend wird die Suspension nach einer der bekannten Methoden entwässert und in eine für die Umsetzung zu Siliciumcarbid geeignete Form gebracht.

Vorzugsweise wird die Entwässerung durch Sprühtrocknung durchgeführt, an die gegebenenfalls noch eine Granulation angeschlossen werden kann, falls noch gröbere Agglomerate gewünscht werden.

Die Reaktion kann grundsätzlich in jedem Ofen durchgeführt werden, der die erforderlichen Temperaturen und Verweilzeiten erlaubt. Im Labormassstab kann dies ein Tiegel- oder Muffelofen sein, im industriellen Massstab sind beispielsweise Schachtöfen, Drehrohröfen oder Wirbelschichtöfen geeignet. Besonders vorteilhaft sind Drehrohröfen, weil sie eine ausreichende Wärmeübertragung ohne Hilfsmedium ermöglichen. Die Reaktionstemperaturen und Verweilzeiten sind aus dem Stand der Technik bekannt und liegen beispielsweise bei 1500 bis 1800°C und in der Grössenordnung von 1 Stunde.

Nach der Reaktion ist es oft erforderlich, den überschüssigen Kohlenstoff zu entfernen. Hierfür existieren mehrere an sich bekannte Methoden.

Es ist beispielsweise möglich, durch Erhitzen in Gegenwart von Sauerstoff den Kohlenstoff zu verbrennen oder mit Wasserstoff unter Druck bei 600 bis 1400°C unter Bildung von Methan umzusetzen. Vorzugsweise wird der Kohlenstoff durch Behandlung mit Ammoniak bei 800 bis 1400°C, besonders bevorzugt bei 1000 bis 1200°C entfernt (F.K.van Dijen, J.Pluijmakers, J.Eur. Ceram.Soc. 5, 385 (1989) und dort zit. Lit.).

Bei dem erfindungsgemässen Verfahren wird die Behandlung mit Ammoniak vorzugsweise in einem Wirbelschichtofen durchgeführt, weil in dieser Art Ofen eine optimale Wechselwirkung zwischen Gas und Feststoff und ein guter Wärmeübergang gewährleistet sind.

Nach der Entfernung des überschüssigen Kohlenstoffs wird das Produkt entweder als solches weiterverwendet oder noch einem Mahl- und Desagglomerationsvorgang unterzogen. Hierfür wird wieder vorzugsweise eine Rührwerkskugelmühle oder ein Attritor verwendet. Als Mahlkörper werden vorzugsweise Siliciumcarbidkugeln eingesetzt, um durch den unvermeidbaren Abrieb keine Fremdsubstanzen einzubringen. Aus demselben Grund wird der Attritor vorzugsweise mit Kunststoff oder (SiC)-Keramik ausgekleidet. Als Flüssigkeit kann sowohl Wasser als auch eine organische Flüssigkeit, wie beispielsweise Isopropanol oder Heptan, verwendet werden. Bei dieser Mahlung bzw. Desagglomeration können auch Zusätze für die spätere Verwendung des Siliciumcarbidpulvers, wie beispielsweise Sinteradditive, eingebracht werden.

Die nachfolgenden Beispiele verdeutlichen die Durchführung des erfindungsgemässen Verfahrens.

Beispiel 1: Reinigung des Ausgangsmaterials

a) Siliciumdioxid: Rohes Siliciumdioxidpulver aus der Aluminiumfluoridproduktion wurde zunächst bei 95°C 4 Stunden mit einer verdünnten (0,6 Gew.%) Hexafluorkieselsäure (6 l auf 1 kg Siliciumdioxid) gerührt und anschliessend abfiltriert. Der Filterkuchen wurde mit entsalztem Wasser (10 l auf 1 kg Siliciumdioxid) gewaschen und getrocknet. Der Aluminiumgehalt wurde durch diese Behandlung von 1,5 Gew.% auf 130 ppm und der Fluorgehalt von 4,5 Gew.% auf 3,3 Gew.% reduziert. Die spezifische Oberfläche des Pulvers betrug 3 m2/g, die Agglomeratgrösse <0,1 mm.

b) Ofenruss: Handelsüblicher Ofenruss (Elftex[R] 470) wurde bei 90°C 60 Minuten mit einer verdünnten (0,6 Gew.%) wässrigen Hexafluorkieselsäure (6 l auf 1 kg Russ) gerührt und anschliessend abfiltriert. Der Filterkuchen wurde mit entsalztem Wasser (5 l auf 1 kg Russ) gewaschen und getrocknet. Der Metallgehalt konnte durch diese Behandlung von 2000 ppm auf 100 ppm gesenkt werden.

Beispiel 2: Herstellung von β-SiC

10,5 kg gewaschenes Siliciumdioxid aus Beispiel 1 wurde mit 0,5 kg β-SiC-Pulver (als Keimbildner), 0,5 kg Triton X-100 (Verflüssiger), 0,1 kg Silikon-Entschäumer und 0,4 kg Polyvinylalkohol (Bindemittel) in 25 l entsalztem Wasser in einer mit Polyurethan ausgekleideten Rührwerkskugelmühle mit Ottawasand (0,8 - 1,1 mm) 20 Minuten (effektive Mahldauer) gemahlen.

Anschliessend wurden 6,9 kg Gasruss (Printex^R U) zugemischt und weitere 15 Minuten gemahlen.

Nach Abtrennen des Sandes durch eine Filterpatrone wurde die Suspension sprühgetrocknet, so dass ein Granulat mit 0,4 mm mittlerer Korngrösse und 2% Restfeuchtigkeit erhalten wurde. Das Granulat wurde in Graphittiegel mit einem Durchmesser von 50 mm gefüllt und 60 Minuten in Argonatmosphäre auf 1700°C erhitzt. Nach dem Abkühlen wurde das Siliciumcarbidpulver in einem Wirbelschichtofen mit Ammoniak 5 Stunden auf 1100°C erhitzt, um den restlichen Kohlenstoff zu entfernen.

Das so erhaltene Siliciumcarbidpulver wies die folgenden Eigenschaften auf:

| | |
|---|---|
| Phasenzusammensetzung (Röntgenbeugung) | 100% ß |
| Spezifische Oberfläche (BET) | 5 m$^2$/g |
| Kohlenstoffgehalt (total) | 29,8 Gew.% |
| Stickstoffgehalt | 0,2 Gew.% |
| Sauerstoffgehalt | 0,3 Gew.% |
| Metalle | 220 ppm |

Beispiel 3

Es wurde eine Suspension aus 10,5 kg gewaschenem Siliciumdioxid und den in Beispiel 2 beschriebenen Zusätzen in 15 l entsalztem Wasser wie in Beispiel 2 beschrieben 20 Minuten in einer Rührwerkskugelmühle gemahlen. Anschliessend wurden 6,6 kg nach Beispiel 1 gewaschener Ofenruss (Elftex 470) und 10 l entsalztes Wasser zugemischt. Die weiteren Schritte erfolgten wie in Beispiel 2 beschrieben. Das so erhaltene Siliciumcarbidpulver hatte folgende Eigenschaften:

| | |
|---|---|
| Phasenzusammensetzung (Röntgenbeugung) | 100% ß |
| Spezifische Oberfläche (BET) | 5 m$^2$/g |
| Kohlenstoffgehalt (total) | 29,8 Gew.% |
| Stickstoffgehalt | 0,2 Gew.% |
| Sauerstoffgehalt | 0,3 Gew.% |
| Metalle | 300 ppm |

**Patentansprüche**

1. Verfahren zur Herstellung von β-Siliciumcarbidpulver aus Siliciumdioxid und Russ durch Erhitzen auf 1200 bis 2000°C in Gegenwart von β-Siliciumcarbidkeimen und anschliessende Entfernung von überschüssigem Kohlenstoff, dadurch gekennzeichnet, dass als Siliciumdioxid das durch Umsetzung von Hexafluorkieselsäure mit Aluminiumhydroxid entstehende amorphe Siliciumdioxid eingesetzt wird.

2. Verfahren nach Patentanspruch 1, dadurch gekennzeichnet, dass das Siliciumdioxid zur Entfernung von Metallverbindungen mit Säure gewaschen wird.

3. Verfahren nach Patentanspruch 2, dadurch gekennzeichnet, dass als Säure verdünnte Hexafluorkieselsäure verwendet wird.

4. Verfahren nach einem der Patentansprüche 1 bis 3, dadurch gekennzeichnet, dass als Russ Gasruss oder gewaschener Ofenruss verwendet wird.

5. Verfahren nach einem oder mehreren der Patentansprüche 1 bis 4, dadurch gekennzeichnet, dass die Entfernung des überschüssigen Kohlenstoffs durch Behandeln mit Ammoniak bei 1000 bis 1200°C erfolgt.

6. Verfahren nach Patentanspruch 5, dadurch gekennzeichnet, dass die Behandlung mit Ammoniak in einer Wirbelschicht durchgeführt wird.

7. Verfahren nach einem oder mehreren der Patentansprüche 1 bis 6, dadurch gekennzeichnet, dass das Siliciumdioxid in einer Rührwerkskugelmühle oder einem Attritor gemahlen und/oder desagglomeriert wird.

8. Verfahren nach Patentanspruch 7, dadurch gekennzeichnet, dass als Mahlkörper in der Rührwerkskugelmühle bzw. dem Attritor abgerundeter Quarzsand als Mahlkörper verwendet wird.

9. Verfahren nach einem oder mehreren der Patentansprüche 1 bis 8, dadurch gekennzeichnet, dass das Reaktionsgemisch aus Siliciumdioxid und Russ durch Sprühtrocknen getrocknet und granuliert wird.

10. Verfahren nach Patentanspruch 9, dadurch gekennzeichnet, dass eine wässrige Suspension sprühgetrocknet wird.

11. Verfahren nach einem oder mehreren der Patentansprüche 1 bis 10, dadurch gekennzeichnet, dass die Reaktion des Siliciumdioxids mit dem Russ in einem Drehrohrofen durchgeführt wird.


## Claims

1. A process for preparing β-silicon carbide powder from silicon dioxide and soot through heating in the presence of β-silicon carbide nuclei to between 1200 and 2000 °C and then removing the surplus carbon, characterised in that as silicon dioxide is employed the amorphous silicon dioxide resulting from the reaction of hexafluorosilicic acid with aluminum hydroxide.

2. A process according to claim 1, characterised in that the silicon dioxide is washed with acid in order to remove any metal compounds.

3. A process according to claim 2, characterised in that as acid is used diluted hexafluorosilicic acid.

4. A process according to one of the claims 1 to 3, characterised in that as soot are used gas soot or washed furnace soot.

5. A process according to one or more of the claims 1 to 4, characterised in that the removal of the surplus carbon is carried out by treatment with ammonia at 1000 to 1200 °C.

6. A process according to claim 5, characterised in that the treatment with ammonia is carried out in a fluidized bed.

7. A process according to one or several of the claims 1 to 6, characterised in that the silicon dioxide is ground and/or deagglomerated in a ball mill with agitator or an attritor.

8. A process according to claim 7, characterised in that rounded off quartz sand is used as grinding body in the ball mill with agitator resp. the attritor.

9. A process according to one or several of the claims 1 to 8, characterised in that the reaction mixture of silicon dioxide and soot is dried by spray-drying and granulated.

10. A process according to claim 9, characterised in that an aqueous suspension is spray-dried.

11. A process according to one or several of the claims 1 to 10, characterised in that the reaction of the silicon dioxide with the soot is carried out in a revolving cylindrical furnace.

**Revendications**

1. Procédé de préparation de poudre de carbure de silicium de variété β à partir de dioxyde de silicium et de noir de carbone en présence de germe de carbure de silicium β par chauffage entre 1200 et 2000°C et par élimination subséquente du carbone excédentaire, caractérisé par le fait que le dioxyde de silicium mis en oeuvre est du dioxyde de silicium amorphe provenant de la réaction de l'acide fluosilicique avec l'hydroxyde d'aluminium.

2. Procédé selon la revendication 1, caractérisé par le fait que le dioxyde de silicium est lavé à l'acide afin de permettre l'élimination de composés métalliques.

3. Procédé selon la revendication 2, caractérisé par le fait que l'acide utilisé est de l'acide fluosilicique dilué.

4. Procédé selon l'une des revendications 1 à 3, caractérisé par le fait que le noir de carbone utilisé est du noir de fumée ou du noir de fourneau lavé.

5. Procédé selon une ou plusieurs des revendications 1 à 4, caractérisé par le fait que l'élimination du carbone excédentaire est effectuée par traitement avec l'ammoniac à une température comprise entre 1000 et 1200°C.

6. Procédé selon la revendication 5, caractérisé par le fait que le traitement à l'ammoniac est effectué sur un lit fluidisé.

7. Procédé selon une ou plusieurs des revendications 1 à 6, caractérisé par le fait que le dioxyde de silicium est broyé dans un broyeur-mélangeur ou un broyeur par frottement ou "attritor" et/ou est désaggloméré.

8. Procédé selon la revendication 7, caractérisé par le fait que le corps de broyage utilisé dans le broyeur-mélangeur ou broyeur par frottement ou "attritor" est du sable silicieux arrondi.

9. Procédé selon une ou plusieurs des revendications 1 à 8, caractérisé par le fait que le mélange réactionnel à base de dioxyde de silicium et de noir de carbone est séché par séchage par pulvérisation et est granulé.

10. Procédé selon la revendication 9, caractérisé par le fait qu'une suspension aqueuse subit un séchage par pulvérisation.

11. Procédé selon une ou plusieurs des revendications 1 à 10, caractérisé par le fait que la réaction du dioxyde de silicium avec le noir de carbone est effectuée dans un four tubulaire tournant.